# EUROPÄISCHE PATENTSCHRIFT

(11) **EP 3 247 536 B1**
(45) Veröffentlichungstag und Bekanntmachung des Hinweises auf die Patenterteilung: **28.10.2020**
(21) Anmeldenummer: 16703711.8
(22) Anmeldetag: 21.01.2016
(51) Int. Cl.: B24C 7/00, B24B 57/04

(54) **REGELUNG DES STRAHLMITTELDURCHSATZES EINER STRAHLANLAGE**
CONTROL OF THE ABRASIVE THROUGHPUT OF A BLASTING INSTALLATION
RÉGULATION DU DÉBIT D'AGENT DE SABLAGE DANS UNE INSTALLATION DE SABLAGE

(30) Priorität: 22.01.2015 DE 102015000632
(43) Veröffentlichungstag der Anmeldung: 29.11.2017
(73) Patentinhaber: Sentenso GmbH, 45711 Datteln (DE)
(72) Erfinder: SCHNEIDAU, Volker, 45711 Datteln (DE); BRENDEBACH, Daniel, 45711 Datteln (DE); BEHLER, Jörg, 45711 Datteln (DE)
(74) Vertreter: Cohausz Hannig Borkowski Wißgott
(86) Internationale Anmeldenummer: PCT/EP2016/000110
(87) Internationale Veröffentlichungsnummer: WO 2016/116277

(56) Entgegenhaltungen:
- WO-A1-2013/135538
- DE-A1- 19 541 228
- DE-A1-102014 201 913
- US-A1- 2010 211 429

## Beschreibung

Die Erfindung betrifft ein Verfahren zur Justierung oder zum Betrieb eines Partikelmenge abmessenden Durchlasssystems einer Partikelstrahlanlage insbesondere einer Strahlanlage zur Bearbeitung von Oberflächen, dessen Durchsatz an Strahlmittel über eine Zeit und/oder Größen veränderbare Durchlassöffnung vorgegeben wird und mittels eines nachangeordneten Durchsatzsensors als Durchsatzsensorsignal (DS) bestimmt wird, wobei das Durchsatzsensorsignal (DS) zur Regelung einer Stellgröße (SG) für den Einstellgrad der Durchlassöffnung verwendet wird.

Bei Partikelstrahlanlagen, die insbesondere zur Bearbeitung von Oberflächen eingesetzt werden, wird der Durchsatz an Strahlmittel, das zur Bearbeitung auf ein Werkstück gestrahlt wird, über ein Durchlasssystem gesteuert. Dieses Durchlasssystem befindet sich in der Regel zwischen einem Vorratsbehälter in dem das Strahlmittel untergebracht ist und einem System durch das das Strahlmittel beschleunigt und auf ein Werkstück gelenkt wird. Zur Beschleunigung des Strahlmittels wird üblicherweise ein Druckluftsystem oder ein Schleuderrad verwendet. Aufgrund von Unregelmäßigkeiten beim Durchfluss des Strahlmittels durch das Durchlasssystem kann es dazu kommen, dass der Durchsatz an Strahlmittel, der dem Werkstück zugeführt wird, nicht konstant ist. Derartige Schwankungen des Durchsatzes an Strahlmittel können durch ungleichmäßiges Fließverhalten oder andere wechselnde physikalische Bedingungen beim Betrieb der Strahlanlage hervorgerufen werden.

Zum Ausgleich der Schwankungen des Durchsatzes wird in der DE 102014201913 A1 eine Vorrichtung vorgestellt, bei der der Durchsatz an Strahlmittel konstant gehalten wird, indem auf eine Erhöhung oder Verminderung des Durchsatzes, der mittels einer Erfassungseinrichtung gemessen wird, die Öffnung eines Ventils variabel geregelt wird. Als Erfassungseinrichtung wird in diesem Fall ein Prallplattensensor verwendet, bei dem der Durchsatz an Strahlmittel aus der Ablenkung eines ablenkbaren Glieds bestimmt wird, wobei bei diesem Messverfahren die elektrischen Eigenschaften des Strahlmaterials unerheblich sind. Das Signal des Prallplattensensors wird zur Regelung des Öffnungsgrades des Ventils verwendet und der Durchlassquerschnitt mechanisch so variiert, dass eine konstante Menge an Strahlmittel pro Zeiteinheit zur Verfügung gestellt wird.

Dieses Prinzip zur Regelung des Durchsatzes an Strahlmittel wird in vergleichbarer Weise auch mit anderen Erfassungseinrichtungen und variablen Durchlassöffnungen verwendet.

Der Nachteil dieser Lösung liegt allerdings darin, dass bei einer Änderung der Strahlmittelzusammensetzung und einer einhergehenden Veränderung der physikalischen Eigenschaften von der Erfassungseinrichtung ein Durchsatzwert gemessen wird, der mit dem tatsächlichen Durchsatz nicht übereinstimmt. In Folge dessen wird dem Werkstück nicht die Menge an Strahlmittel zugeführt, die für den jeweiligen Bestrahlungsprozess benötigt wird. Eine Veränderung der Strahlmittelzusammensetzung kann durch einen Wechsel der Strahlmittelart bewusst hervorgerufen werden oder durch eine Verunreinigung bzw. Modifikation des Strahlmittels durch widerholte Verwendung ungewollt stattfinden.

Gerade bei Partikelstrahlanlagen, die in Produktionslinien eingesetzt werden und bei denen eine präzise Menge an Strahlmittel für den Prozess gefordert ist, stellt dies ein Problem dar, da sich eine Änderung des Strahlmitteldurchsatzes auf die Qualität der Bearbeitung auswirkt.

Aufgabe der Erfindung ist es, diesen Nachteil zu überwinden und ein Verfahren zur Justierung oder zum Betrieb eines Durchlasssystems einer Strahlanlage zur Verfügung zu stellen, wobei die Justierung des Durchlasssystems mit einem minimalen personellen und zeitlichen Aufwand durchführbar ist und beim Betrieb der tatsächlich angeforderte Durchsatz an Strahlmittel direkt gewährleistet wird.

Diese Aufgabe wird durch ein Verfahren gelöst, bei dem zur Justierung des Durchlasssystems für mindestens einen Wert der Stellgröße (SG) der tatsächliche Durchsatz (D) durch die veränderbare Durchlassöffnung, mittels einer Messung des durchgelassenen Strahlmittelgewichts (M) innerhalb einer definierten Zeitspanne (Dt) bestimmt wird, und die Stellgröße (SG), der tatsächliche Durchsatz (D) und das entsprechende Durchsatzsensorsignal (DS) in einer Zuordnungstabelle abgelegt werden, wobei die Beziehungen zwischen dem tatsächlichem Durchsatz (D), der Stellgröße (SG) und dem Durchlasssensorsignal (DS) beim darauffolgenden Betrieb verwendet werden.

Die Erstellung der Zuordnungstabelle bietet den Vorteil, dass beim auf die Justierung folgenden Betrieb des Durchlasssystems eine Stellgröße (SG) vorgegeben werden kann, die dem geforderten tatsächlichen Durchsatz (D) entspricht. Dadurch nimmt der Durchsatz an Strahlmittel durch das Durchlasssystem den geforderten Wert ein, so dass beim Strahlprozess die erwünschte Bearbeitungsqualität gewährleistet ist.

Aus der bei der Justierung erstellten Zuordnungstabelle, in der für eine diskrete Anzahl an Werten für die Stellgröße (SG) der entsprechende tatsächliche Durchsatz (D) und das entsprechende Durchsatzsensorsignal (DS) abgelegt sind, wird in einer vorteilhaften Ausführung der Erfindung ein funktioneller Zusammenhang zwischen der Stellgröße (SG) und dem tatsächlichen Durchsatz (D) berechnet. Dadurch wird auch bei einem angeforderten Wert für den tatsächlichen Durchsatz (D), der nicht als diskreter Wert in der Zuordnungstabelle abgelegt ist, eine Stellgröße (SG) zugeordnet, die dem jeweiligen angeforderten tatsächlichen Durchsatz (D) entspricht oder nahe kommt. Damit ist für jeden angeforderten Durchsatz (D), der vom Durchlasssystem realisiert werden kann, eine entsprechende Stellgröße (SG) zur Steuerung der Durchlassöffnung vorhanden.

Ebenso wird in einer weiteren vorteilhaften Ausführung der Erfindung aus der Zuordnungstabelle der tatsächliche Durchsatz (D) als Funktion des Durchsatzsensorsignals (DS) berechnet. Hierdurch ist es möglich, für ein gemessenes Durchsatzsensorsignal (DS), welches nicht in der Zuordnungstabelle abgelegt ist, den tatsächlichen Durchsatz (D) zumindest annährend zu bestimmen. Damit kann aus dem Durchsatzsensorsignal (DS) der tatsächliche Durchsatz (D) im Betrieb direkt bestimmt werden und für die Regelung oder als Anzeige und/oder zur Protokollierung des tatsächlichen Durchsatzes (D) verwendet werden.

Für die Berechnung der Stellgröße (SG) als Funktion des tatsächlichen Durchsatzes (D) und des tatsächlichen Durchsatzes (D) als Funktion des Durchsatzsensorsignals (DS) wird in einer vorteilhaften Ausführung der Erfindung eine lineare Interpolation zwischen den diskreten Werten der Zuordnungstabelle durchgeführt. Es handelt sich dabei um eine einfache mathematische Operation, die mit geringem Rechenaufwand realisiert werden kann und damit bei der Regelung und/oder Steuerung vergleichsweise schnell durchzuführen ist.

Die Stellgröße (SG) als Funktion des tatsächlichen Durchsatzes (D) und der tatsächliche Durchsatz (D) als Funktion des Durchsatzsensorsignals (DS) wird in einer weiteren vorteilhaften Ausführung der Erfindung durch ein Polynom angenähert. Für eine zumindest grobe Näherung des Polynoms an die diskreten Werte der Zuordnungstabelle ist es notwendig, ein Polynom mindestens zweiter Ordnung zu verwenden. Es hat sich gezeigt, dass die Näherung durch ein Polynom vierter Ordnung bei relativ kleinem Rechenaufwand meist eine ausreichende Annäherung an die diskreten Werte der Zuordnungstabelle gewährleistet. Neben der Annäherung durch ein Polynom werden in einer weiteren vorteilhaften Ausführung der Erfindung die diskreten Werte der Zuordnungstabelle über einen Polynomzug verbunden. Dabei handelt es sich ebenfalls um eine Rechenoperation, die mit vertretbarem Rechenaufwand eine ausreichende Näherung an die diskreten Messwerte der Zuordnungstabelle erlaubt.

Zur Justierung des Durchlasssystems wird die Stellgröße (SG) in einer vorteilhaften Ausführung der Erfindung programmgesteuert in diskreten Schritten verstellt und der tatsächliche Durchsatz (D), das Durchsatzsensorsignal (DS) sowie die jeweilige Stellgröße (SG) in der Zuordnungstabelle für jeden diskreten Schritt abgelegt. Bevorzugt wird der Einstellbereich der Stellgröße (SG) in eine bestimmte Anzahl äquidistanter Schritte aufgeteilt und die jeweiligen Werte der Stellgröße (SG) zeitlich nacheinander angesteuert. Die Anzahl der Schritte ist abhängig von der zur Verfügung stehenden Justierungszeit und der geforderten Genauigkeit der Zuordnung, wobei eine Aufteilung in 10 bis 20 Schritte bevorzugt wird. In einer bevorzugten Ausführung der Erfindung werden für jeden diskreten Schritt der Stellgröße (SG) mehrere Messwerte mit jeweils einer Messzeitspanne (Dt) aufgenommen und der Mittelwert der Messwerte in der Zuordnungstabelle abgelegt. Dieses Vorgehen erlaubt die automatische Erstellung der Zuordnungstabelle, bei der der personelle Aufwand und die beanspruchte Zeit für die Justierung minimal sind.

Bei der Verwendung von Strahlmitteln unterschiedlicher Zusammensetzung und/oder physikalischer Eigenschaften wird für die verwendeten Strahlmittel jeweils eine entsprechende Zuordnungstabelle erstellt. Beim Betrieb der Strahlanlage wird dann die entsprechende Zuordnungstabelle für die Steuerung und/oder Regelung des Durchlasssystems verwendet. Damit wird im Betrieb gewährleistet, dass beim Strahlmittelwechsel zu einem bereits bekannten Strahlmittel eine Justierung des Durchsatzsystems nicht durchgeführt werden muss, aber dennoch der angeforderte Strahlmitteldurchsatz zum zu bearbeitenden Werkstück gelangt.

Zum Betrieb der Strahlanlage wird das Durchlasssystem beim Start des Strahlprozesses so gesteuert, dass für den angeforderten tatsächlichen Durchsatz (D) die entsprechende Stellgröße (SG) aus der Zuordnungstabelle, die bei der Justierung bestimmt worden ist, berechnet und an der Durchlassöffnung angelegt wird. Anschließend wird die Stellgröße (SG) der Durchlassöffnung auf Grundlage des gemessenen Durchsatzsensorsignal (DS) derart geregelt, dass der Durchsatz konstant bleibt. Damit wird beim Start des Strahlprozesses im Betrieb des Durchlasssystems direkt die gewünschte Menge an Strahlmittel zur Verfügung gestellt, so dass am Werkstück die gewünschte Bearbeitungsqualität hervorgerufen wird. Dies hat grade bei sehr kurzen Bestrahlzeiten des Werkstücks den Vorteil, dass quasi instantan der angeforderte Durchsatz an Strahlmittel zur Verfügung gestellt und anschließend auf dem angeforderten Wert gehalten wird.

Zudem wird beim Betrieb des Durchlasssystems der tatsächliche Durchsatz (D) auf Grundlage des Durchsatzsignals (DS) aus der Zuordnungstabelle bestimmt. Damit wird im Betrieb der tatsächliche Durchsatz (D) entweder über eine Anzeige angezeigt und/oder protokolliert sowie die Regelung auf einen angeforderten Durchsatzwert realisiert.

In einer weiteren vorteilhaften Ausführung der Erfindung werden beim Betrieb des Durchlasssystems die Umgebungsbedingungen, wie Umgebungstemperatur, Luftdruck und Luftfeuchtigkeit, gemessen und aus dieser Messung ein Korrekturwert bestimmt, mit dem das Durchsatzsensorsignal (DS) und/oder die Stellgröße (SG) aus der Zuordnungstabelle multipliziert werden. Auf diese Weise werden die veränderten Umgebungsbedingungen und ihr Einfluss auf das Durchlasssystem berücksichtigt. Die Bestimmung des Korrekturfaktors basiert auf einem messtechnisch bestimmten und/oder mathematisch berechneten Zusammenhang zwischen Durchsatzsensorsignal (DS) sowie Stellgröße (SG) und den Umgebungsbedingungen. Dies bietet den Vorteil, dass man ein umgebungsbedingungsabhängiges Verhalten des Durchlasssystems kompensieren kann.

Bei einer Strahlanlage, die insbesondere in einer Produktionslinie integriert ist, wird in einer vorteilhaften Ausführung der Erfindung automatisch zwischen der Justierung und dem Betrieb umgeschaltet, indem das Strahlmittel entweder auf ein Werkstück oder in einen Sammelbehälter geleitet wird. Hierdurch ist es möglich, bei einem Wechsel des Strahlmittels oder bei verschleißbedingten Änderungen des Strahlmittels und den damit verbundenen wechselnden physikalischen Eigenschaften dennoch die gewünschte Menge an Strahlmittel im Betrieb auf das Werkstück zu führen. Dies bietet gerade in Produktionslinien Vorteile, da eine schnellere Justierung durchführbar ist und damit kürzere Ausfallzeiten entstehen.

Bei der Messung des tatsächlichen Durchsatzes (D) wird das Strahlmittelgewicht (M) bei der vorliegenden Erfindung in vorteilhafter Weise entweder durch Messung der Gewichtszunahme eines Sammelbehälters, in den das Strahlmittel geführt wird, oder der Gewichtsabnahme eines Vorratsbehälters, aus dem das Strahlmittel zugeführt wird, gemessen. Die Messung der Gewichtsabnahme bietet den Vorteil, dass man das Strahlmittelgewicht, das den Vorratsbehälter durch die Durchlassöffnung verlässt, direkt ohne Zeitverzögerung bis zum Erreichen eines Sammelbehälters misst. Aufgrund des immensen Gewichts hat die Messung der Gewichtsabnahme des Vorratsbehälters hat allerdings bei großen bzw. schweren Vorratsbehältern den Nachteil, dass dadurch die Genauigkeit der Messung eingeschränkt wird. In diesem Fall ist es vorteilhaft, etwaige Verzögerungszeiten bis zum Erreichen des Sammelbehälters in Kauf zu nehmen und die Gewichtszunahme des Sammelbehälters zu messen, da diese bei entsprechenden Messzeitspannen (Dt) deutlich kleiner ist und einfacher sowie genauer zu messen ist.

Zur Überprüfung der Justierung der Strahlanlage wird vorteilhafter Weise ein bestimmter Durchsatzwert angefordert und der tatsächliche Durchsatz durch das Durchlasssystem mittels einer Messung des durchgelassenen Strahlmittelgewichts (M) innerhalb einer definierten Zeitspanne (Dt) bestimmt. Bei der Überprüfung wird aus der Zuordnungstabelle, die bei der Justierung erstellt wurde, für den angeforderten Durchlass eine entsprechende Stellgröße (SG) berechnet und an der Durchlassöffnung angelegt.

Eine direkte Überprüfung der Justierung wird zeitlich unmittelbar nach der Justierung durchgeführt. Stimmt der angeforderte Durchlass in diesem Fall nicht mit dem tatsächlich gemessenen Durchlass überein, so ist eine erneute Aufnahme der Zuordnungstabelle mit einer größeren Anzahl an diskreten Schritten der Stellgröße (SG) oder eine exaktere Berechnung des funktionalen Zusammenhangs zwischen den Größen aus der Zuordnungstabelle notwendig. Eine exaktere Berechnung des funktionalen Zusammenhangs wird bevorzugt über die Annäherung durch ein Polynom höherer Ordnung realisiert. Mit der direkten Überprüfung wird sichergestellt, dass vor dem Betrieb der Strahlanlage eine, den Anforderungen entsprechende, genaue Justierung vorgenommen worden ist.

Eine Überprüfung der Justierung wird vorteilhafterweise ebenfalls nach einer gewissen Betriebszeit in Betriebspausen durchgeführt. Stimmt der angeforderte Durchsatz in diesem Fall nicht mit dem tatsächlichen Durchlass überein, so ist eine erneute Justierung mit Aufnahme der Zuordnungstabelle notwendig. Mit einer regelmäßigen Überprüfung der Justierung werden betriebsbedingte Einflüsse auf das Durchlasssystem sowie Veränderungen des Strahlmittels berücksichtigt und durch eine erneute Justierung kompensiert. Die Durchführung einer Überprüfung hat dabei den Vorteil, dass eine Aufnahme einer kompletten Zuordnungstabelle erst bei Bedarf erfolgt und somit neben der Zeit weitere Ressourcen eingespart werden.

Das beschriebene Verfahren wird bevorzugt bei Partikelstrahlanlagen verwendet, die über einen Vorratsbehälter verfügen, der über ein Durchlasssystem mit einer Auslassöffnung verbunden ist. Das Durchlasssystem besteht dabei aus einer Zeit und/oder Größen veränderbaren Durchlassöffnung und einem nachgelagerten Durchsatzsensor. Zusätzlich weist die Strahlanlage einen Sammelbehälter mit einer Wägeeinheit auf, die das Strahlmittel aus dem Durchlasssystem aufnimmt. Das Durchlasssystem ist mit einem Prozessmodul verbunden, welches die Zeit und/oder Größen veränderbare Durchlassöffnung regelt sowie den Durchlasssensor ausliest. Zur Auswertung der Wägeeinheit und zur Steuerung des Prozessmoduls ist dieses mit einer Rechnereinheit verbunden. Durch die Verwendung eines Auffangbehälters mit einer Wägeeinheit wird das Strahlmittelgewicht innerhalb einer definierten Zeitspanne gemessen und damit der tatsächliche Durchsatz nach dem oben beschriebenen Verfahren bestimmt. Die entsprechende Regelung und Steuerung des Durchlasssystems wird von der Rechnereinheit in Verbindung mit dem Prozessmodul durchgeführt.

Als Zeit- und/oder Größen veränderbare Durchlassöffnung kann ein mechanisch verstellbarer Durchlassquerschnitt oder ein Magnetfeldventil verwendet werden. Bei einem ferromagnetischen Strahlmittel wird bevorzugt ein Magnetfeldventil verwendet, bei dem das Strahlmittel durch ein angelegtes Magnetfeld beim Durchfluss durch die Durchlassöffnung gehindert ist und durch Anlegen eines zusätzlichen kompensierendes magnetischen Feldes geöffnet wird. Beim Magnetfeldventil wird der Durchsatz besonders bevorzugt durch eine Pulsweitenmodulation durchgeführt, wobei das Tastverhältnis proportional zur Stellgröße ist.

Für die Messung des Durchsatzes während des Betriebs wird ein Durchlasssensor als ein Mikrowellensensor, ein Ultraschallsensor, ein Prallplattensensor, ein Induktionssensor oder ein Kapazitätssensor ausgeführt. Aufgrund der einfachen und robusten Bauart werden bei der zugrundeliegenden Erfindung bevorzugt Induktionssensoren oder Kapazitätssensoren als Durchlasssensor verwendet.

Bei bereits beschleunigtem Strahlmittel hat sich herausgestellt, dass es vorteilhaft ist, zusätzlich zum Sammelbehälter einen vorgelagerten Abscheider zu verwenden, in dem das Strahlmittel von anderen Prozessstoffen abgeschieden wird und komplett in den Sammelbehälter geführt wird. Für die Trennung des Strahlmittels von der Luft kann dabei besonders bevorzugt ein Zyklon als Abscheider verwendet werden. In diesem wird die Luft vom Strahlmittel getrennt und durch einen Trichter in den Sammelbehälter geführt. Dies ist insbesondere dann vorteilhaft, wenn das Strahlmittel bereits über eine hohe Geschwindigkeit verfügt und ein einfaches Hineinführen in den Sammelbehälter das Messergebnis verfälschen würde. Unter Verwendung eines Abscheiders lässt sich eine Umschaltung zwischen Justierung und normalem Betrieb realisieren, indem zwischen die Auslassöffnung und das Durchlasssystem eine Weiche eingefügt wird, welche das Strahlmittel entweder in den Abscheider oder auf das zu bestrahlende Werkstück richtet. Die Weiche kann dabei als Roboter ausgeführt sein, der die Auslassöffnung für das Strahlmittel entweder in den Abscheider oder auf das Werkstück richtet. Eine derartige Anordnung lässt sich vorzugsweise in eine Produktionsanlage überführen, in der automatisch zwischen der Justierung und dem Betrieb geschaltet wird. Dadurch lässt sich eine automatisierte Justierung durchführen, welche die Ausfallzeiten der Produktionsanlage reduzieren.

Das Prozessmodul ist mit einer Rechnereinheit verbunden, regelt die veränderbare Durchlassöffnung und liest den Durchsatzsensor aus. Vorzugsweise verfügt das Prozessmodul zur Verbindung mit der Durchlassöffnung und dem Durchlasssensor über eine Stellgrößenschnittstelle und eine Durchlasssensorschnittstelle, welche entweder digital oder analog ausgeführt ist. Bei der analogen Ausführung sind die Schnittstellen zusätzlich über Analog-Digital-Wandler mit einem Mikrocontroller verbunden, der die Regelung und Steuerung des Durchlasssystems übernimmt. Der Mikrocontroller speichert die Zuordnungstabelle auf einer Speichereinheit und ist mit einer digitale Rechnerschnittstelle und/oder einer Schnittstelle zu einer Maschinensteuerung verbunden, über die eine Steuerung des Prozessmoduls durchgeführt wird. Ein derartiges Prozessmodul ermöglicht es, das Verfahren zur Justierung und zum Betrieb eines Durchlasssystems einer Strahlanlage in eine Produktionslinie zu integrieren oder als alleinstehende Lösung zu realisieren.

Ausführungsbeispiele der Erfindung sind in den Zeichnungen dargestellt und werden im Folgenden näher beschrieben. Es zeigen:
Figur 1: Eine Partikelstrahlanlage, wie sie zur Justierung des Durchlasssystems verwendet wird, wobei die Wägeeinheit mit einem Sammelbehälter verbunden ist
Figur 2: Eine Partikelstrahlanlage, wie sie zur Justierung des Durchlasssystems verwendet wird, wobei die Wägeeinheit mit einem Vorratsbehälter verbunden ist
Figur 3: Die Einträge der Zuordnungstabelle
Figur 4a: Eine lineare Interpolation des tatsächlichen Durchsatzes (D) als Funktion der Stellgröße (SG)
Figur 4b: Ein Durchsatzsensorsignal (DS) als Funktion des tatsächlichen Durchsatzes (D), das durch ein Polynom angenähert ist
Figur 5: Eine Partikelstrahlanlage mit integrierter Umschaltung zwischen Justierung und Betrieb
Figur 6: Übersichtsdarstellung eines Prozessmoduls

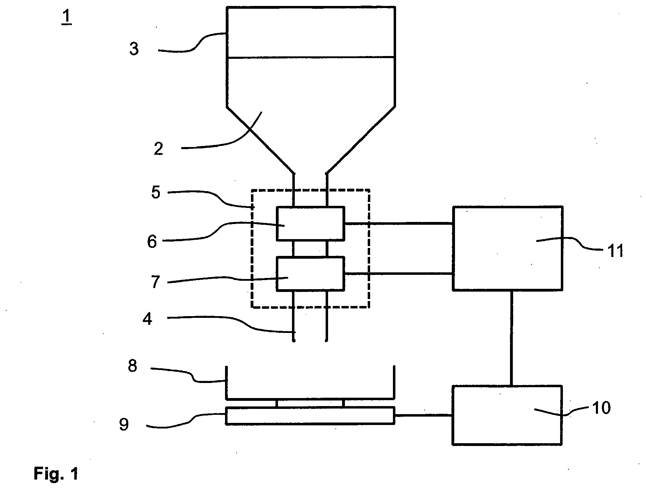

In Fig. 1 ist eine Partikelstrahlanlage 1 dargestellt, bei der sich das Strahlmittel 2 im Vorratsbehälter 3 befindet, und aus diesem über eine Auslassöffnung 4 ausgeführt wird. Zwischen dem Vorratsbehälter 3 und der Auslassöffnung 4 ist das Durchlasssystem 5 angeordnet, welches aus einer Zeit- und/oder Größen veränderbaren Durchlassöffnung 6 und einem nachgelagerten Durchsatzsensor 7 besteht. Die Menge an Strahlmittel 2, die den Vorratsbehälter 3 verlässt, wird durch den Einstellgrad der Durchlassöffnung 6 vorgegeben und mittels des Durchsatzsensors 7 gemessen. Zur Justierung wird das Strahlmittel in einen Sammelbehälter 8 geführt und dessen Gewicht (M) durch die Wegeinheit 9 gemessen. Die Wägeeinheit 9 wird dabei über die Rechnereinheit 10 ausgewertet und der Durchsatz (D) durch die Auslassöffnung 4 als durchgelassenes Strahlmittelgewicht (M) innerhalb einer definierten Zeitspanne (Dt) bestimmt. Der Einstellgrad der veränderbaren Durchlassöffnung 6 wird als Stellgröße (SG) vom Prozessmodul 11 vorgegeben, wobei das Prozessmodul 11 gleichzeitig auch das Durchsatzsensorsignal (DS) des Durchlasssensors 7 ausliest. Durch gleichzeitige Messung des tatsächlichen Durchsatzes (D) über die Wägeeinheit 9 und die Messung des Durchsatzsensorsignals (DS) mittels des Durchsatzsensors 7 bei programmgesteuert vorgegebenen Werten der Stellgröße (SG) der Durchlassöffnung 6 wird das Durchlasssystem justiert.

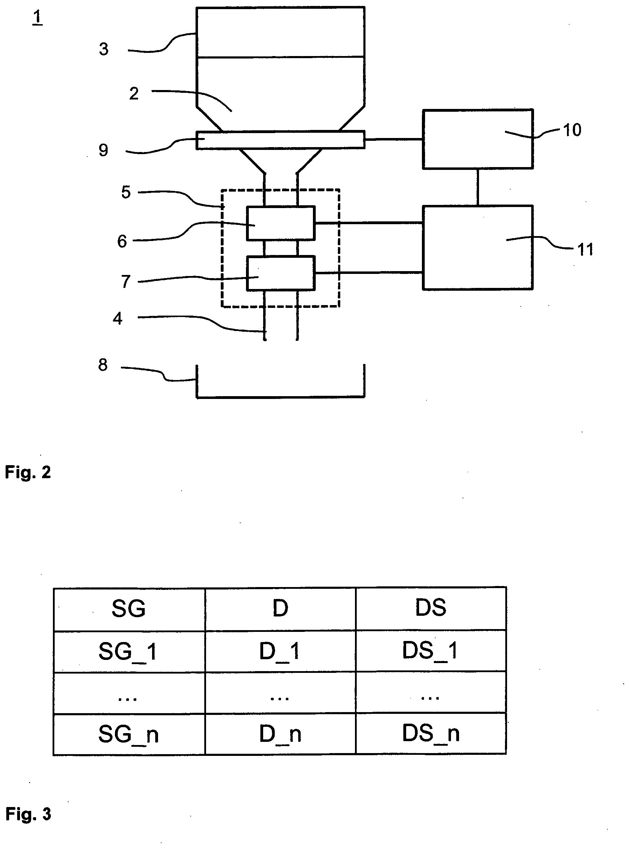

Die Fig. 2 zeigt eine weitere Ausführung der Erfindung, wobei die im Gegensatz zur in Fig. 1 die Partikelstrahlanlage 1 eine Wägeeinheit 9 aufweist, die mit dem Vorratsbehälter 3 verbunden ist. Bei dieser Ausführung wird das Strahlmittelgewicht, das durch die Durchlassöffnung 6 fließt, dadurch bestimmt, dass die Wägeeinheit 9 die Gewichtsabnahme des Vorratsbehälters 3 misst. Dies hat im Gegensatz zur Messung der Gewichtszunahme des Sammelbehälters 8 den Vorteil, dass Gewichtsmessung direkt bei Ausfluss des Strahlmittels aus der Auslassöffnung 4 gemessen wird und eine Zeitverzögerung bis zum Eintreffen des Strahlmittels am Sammelbehälter 8 vermieden wird. Diese Anordnung bietet vor allem dann Vorteile, wenn der Vorratsbehälter inklusive Inhalt über ein Gewicht verfügt, welches ohne großen Aufwand mit hinreichender Genauigkeit zu messen ist und wird deshalb bei Partikelstrahlanlagen verwendet, bei denen eine kleine Menge an vorgehaltenem Strahlmittel ausreicht.

In einer vorteilhaften Ausführung der Erfindung wird die Anordnung einer Partikelstrahlanlage 1 aus Fig. 2 ausschließlich zur Justierung oder Überprüfung eines Durchlasssystems 5 verwendet. Dabei wird ein Durchlasssystem, welches in Zukunft im Betrieb zum Einsatz kommen soll, zunächst in eine Partikelstrahlanlage 1, nach Fig. 2, zwischen Vorratsbehälter 3 und Auslassöffnung 4 eingesetzt und anschließend nach den oben beschriebenen Verfahren eine Zuordnungstabelle zwischen des Stellgröße (SG), dem tatsächlichem Durchlass (D) sowie dem Durchlasssensorsignal (DS) erstellt und abgelegt. Die Zuordnungstabelle wird anschließend im Betrieb des jeweiligen Durchlasssystems 5, das beispielsweise in eine Produktionseinheit eingebaut wird, zur Regelung und/oder Steuerung des selbigen verwendet. Aufgrund der vergleichsweise kleinen Menge an Strahlmittel, die für die Justierung notwendig ist, lässt sich bei der Justierung die Gewichtsabnahme des Vorratsbehälters 3 einfach messen und eine Zeitverzögerungen bis zum Eintreffen des Strahlmittels am Sammelbehälter 8 vermeiden.

Die aufgenommenen Werte des tatsächlichen Durchsatzes (D), des Durchsatzsensorsignals (DS) und der Stellgröße (SG) werden in der Zuordnungstabelle abgelegt, deren Einträge in der Fig. 3 dargestellt sind. Die Anzahl der vorgegebenen Werte der Stellgröße (SG) ist beliebig und kann je nach Strahlmittelzusammensetzung, benötigter oder vorhandener Justierungszeit und erforderlichen Genauigkeit gewählt werden. Die Zuordnungstabelle wird im Prozessmodul 11 und/oder in der Rechnereinheit 10 abgelegt. Beim Betrieb des Durchlasssystems 5 mit einem geforderten tatsächlichen Durchsatz (D) wird die entsprechende Stellgröße (SG) aus der Zuordnungstabelle ausgelesen, so dass an der Auslassöffnung 4 der geforderte tatsächliche Durchsatz dem Bearbeitungsprozess im Betrieb zugeführt wird. Mittels der Zuordnungstabelle wird zudem beim Betrieb der Partikelstrahlanlage 1 aus dem gemessenen Durchsatzsensorsignals (DS) des Durchsatzsensors 7 der tatsächliche Durchsatz (D) bestimmt.

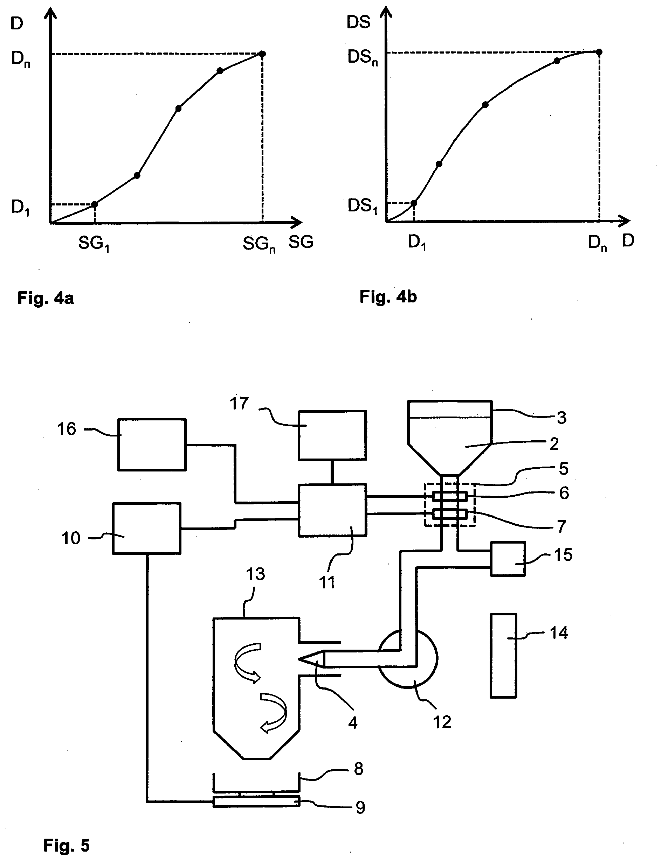

In Fig. 4a ist dargestellt, wie aus den diskreten Messwerten der Zuordnungstabelle über lineare Interpolation ein Zusammenhang zwischen der Stellgröße (SG) und dem tatsächlichen Durchsatz (D) berechnet wird. Mit Hilfe dieses Verfahrens wird die Stellgröße (SG) als Funktion des Durchsatzes (D) bestimmt, so dass auch zwischen den diskreten Messwerten ein Wert für die Stellgröße (SG) bei einem angeforderten tatsächlichen Durchsatz (D) vorliegt.

Die Fig. 4b stellt dar, wie aus den diskreten Werten der Zuordnungstabelle ein funktionaler Zusammenhang zwischen dem Durchsatz (D) und dem Durchsatzsensorsignal (DS) durch eine Näherung über ein Polynom berechnet wird. Aus diesem funktionalen Zusammenhang wird aus dem gemessenen Durchsatzsensorsignal (DS) der tatsächliche Durchsatz (D) durch die Auslassöffnung 4 bestimmt.

In der Fig. 5 ist eine Partikelstrahlanlage dargestellt, wie sie im Betrieb eingesetzt wird. Das Strahlmittel 2 befindet sich im Vorratsbehälter 3 und wird durch das Durchlasssystem 5 in Richtung einer Auslassöffnung 4 geführt, wobei sich zwischen der Auslassöffnung 4 und dem Durchlasssystem 5 eine Weiche 12 befindet, die das Strahlmittel entweder in den Abscheider 13 oder auf das Werkstück 14 lenkt. Im Abscheider 13 wird das Strahlmittel von anderen Prozessstoffen abgeschieden und vollständig durch den Sammelbehälter 8 aufgenommen. Das Gewicht es Strahlmittels (M) wird mittels einer Wägeeinheit 9 gemessen. Durch die Rechnereinheit 10 wird der Durchsatz (D) durch die Durchlassöffnung 6 bestimmt, indem das durchgelassene Strahlmittelgewicht (M) innerhalb einer definierten Zeitspanne (Dt) bestimmt wird. In einer vorteilhaften Ausführung der Erfindung wird das Strahlmittel 2 durch eine Drucklufterzeugungseinheit 15 beschleunigt, so dass bei der Bestrahlung des Werkstücks 14 das gewünschte Prozessergebnis erzielt wird. Eine Integration der Stahlmittelanlage 1 in einer Produktionslinie wird dadurch realisiert, dass das Prozessmodul 11 mit einer übergeordneten Maschinensteuerung 16 verbunden ist.

In einer vorteilhaften Ausführung der Erfindung werden die Umgebungsbedingungen, wie Temperatur, Luftdruck und Luftfeuchtigkeit, durch die Sensoreinheit 17 gemessen. Die Umgebungsbedingungen werden im Betrieb kompensiert, indem die die Stellgröße und /oder das Durchlasssensorsignal aus der Zuordnungstabelle mit einer Korrekturfunktion multipliziert wird, die von den Umgebungsbedingungen abhängt.

In einer weiteren vorteilhaften Ausführung der Erfindung wird der Sammelbehälter 8 aus Fig. 5 als trichterförmiger Sammelbehälter ausgeführt, an dessen Trichterhals ein Absperrventil angebracht ist. Bei Beendigung des Justierungsvorgangs wird das Absperrventil geöffnet und das Strahlmittel, das sich im trichterförmigen Sammelbehälter befindet in den Vorratsbehälter 3 geführt und für die weitere Bearbeitung zur Verfügung gestellt.

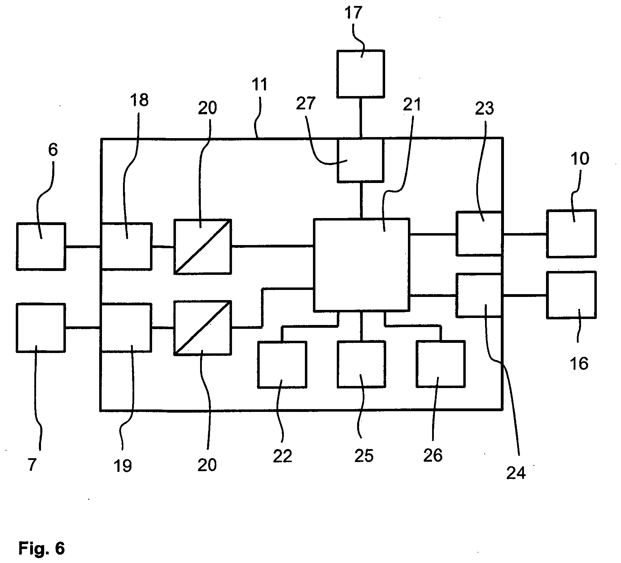

Fig. 6 stellt eine vorteilhafte Ausführung des Prozessmoduls 11 dar, welches die verstellbare Durchlassöffnung 6 regelt und das den Durchsatzsensor 7 ausliest. Hierfür weist das Prozessmodul 11 eine Stellgrößenschnittstelle 18 für die Stellgröße und eine Durchlasssensorschnittstelle 19 für das Durchlasssensorsignal (DS) auf. Diese Schnittstellen sind entweder analog oder digital ausgeführt. Bei einer analogen Ausführung werden zusätzliche Analog-Digital-Wandler 20 verwendet, um eine Verbindung mit einem Mikrocontroller 21 zu realisieren. Der Mikrocontroller 21 verfügt über eine Speichereinheit 22 und/oder ist mit einer solchen verbunden, in diese wird während der Justierung die bestimmte Zuordnungstabelle abgelegt und beim Betrieb abgerufen. Die Verbindung des Prozessmoduls 11 mit der Rechnereinheit 10 wird über eine Rechnerschnittstelle 23 realisiert. Bei einer Integration in eine übergeordnete Maschineneinheit wird eine Verbindung zur Maschinensteuerung 16 über eine Maschinenschnittstelle 24 realisiert. Zusätzlich wird über eine Umgebungssensorschnittstelle 27 die Sensoreinheit 17 für die Umgebungsbedingungen ausgelesen und die Temperatur, der Luftdruck sowie die Luftfeuchtigkeit bei der Steuerung und/oder Regelung des Durchlasssystems 5 durch das Prozessmodul 11 berücksichtigt.

Die Maschinenschnittstelle 24 weist in einer vorteilhaften Ausführung ein digitales Signal für den Tabellenaufruf auf, ein digitales Freigabesignal für die Durchlassöffnung, ein analoges Steuersignal und ein analoges Durchsatzsignal auf. Unter Verwendung dieser Signale ist eine einfache Integration des Prozessmoduls in eine übergeordnete speicherprogrammierbare oder computerbasierte Maschinensteuerung realisierbar.

Die Stellgrößenschnittstelle 18 weist in einer weiteren Ausführung ein zusätzliches digitales Freigabesignal auf, welches ein Öffnen der Durchlassöffnung 6 bei Bedarf freigibt. Damit wird beim Betrieb eine zusätzliche Sicherheitsfunktion gewährleistet ungewolltes Auslassen des Strahlmittels verhindert.

In einer vorteilhaften Ausführung verfügt das Prozessmodul 11 des Weiteren über eine Bedieneinheit 25, die zur Einstellung von Betriebsmodi des Prozessmoduls vorgesehen ist, sowie über eine Anzeigeeinheit 26, die den Status des Prozessmoduls 11 anzeigt und Betriebsparameter ausgibt. In diesem Fall wird die Wägeeinheit direkt über das Prozessmodul ausgelesen. Diese Ausführung der Erfindung erlaubt einen Betrieb des Prozessmoduls ohne Verbindung zu einer Rechnerschnittstelle oder zu einer übergeordneten Maschinensteuerung.

Das Prozessmodul 11 ist in einer weiteren Ausführung vorteilhafter Weise räumlich in das Durchlasssystem 5 integriert. Diese Ausführung der Erfindung bietet den Vorteil, dass eine Verbindung zwischen Prozessmodul 11 und Durchlasssystem 5 über die Stellgrößenschnittstelle 18 sowie die Durchlasssensorschnittstelle 19 entfällt. Damit wird eine räumlich kompaktere Realisierung des Aufbaus erzielt.

In einer weiteren vorteilhaften Ausführung der Erfindung wird die Steuerungsfunktion Funktion des Prozessmoduls und der Rechnereinheit direkt durch eine speicherprogrammierbare oder computerbasierte übergeordnete Maschinensteuerung übernommen. Die entsprechenden Schnittstellen zum Durchlasssystem und zur Wägeeinheit sowie die Speichereinheit für die Zuordnungstabelle werden in dieser Ausführung der Erfindung von der übergeordneten Maschinensteuerung zur Verfügung gestellt.

Eine derartige Ausführung der Erfindung erlaubt gerade in Produktionslinien eine einfache Integrierung des oben beschriebenen Verfahrens zum Betrieb oder zur Justierung eines Durchlasssystems einer Partikelstrahlanlage, wobei die Justierung des Durchlasssystems mit einem minimalen Aufwand durchführbar ist und beim Betrieb der tatsächlich angeforderte Durchsatz an Strahlmittel direkt gewährleistet wird.

### Bezugszeichen

- 1: Partikelstrahlanlage
- 2: Strahlmittel
- 3: Vorratsbehälter
- 4: Auslassöffnung
- 5: Durchlasssystem
- 6: Durchlassöffnung
- 7: Durchsatzsensor
- 8: Sammelbehälter
- 9: Wägeeinheit
- 10: Rechnereinheit
- 11: Prozessmodul
- 12: Weiche
- 13: Abscheider
- 14: Werkstück
- 15: Drucklufterzeugungseinheit
- 16: Maschinensteuerung
- 17: Sensoreinheit
- 18: Stellgrößenschnittstelle
- 19: Durchlasssensorschnittstelle
- 20: Analog-Digital Wandler
- 21: Mikrocontroller
- 22: Speichereinheit
- 23: Rechnerschnittstelle
- 24: Schnittstelle zur Maschinensteuerung
- 25: Bedieneinheit
- 26: Anzeigeeinheit
- 27: Umgebungssensorschnittstelle

- SG: Stellgröße
- DS: Durchsatzsensorsignal
- D: Durchsatz
- M: Strahlmittelgewicht
- Dt: Zeitspanne

## Patentansprüche

1. Verfahren zur Justierung oder zum Betrieb eines Partikelmenge abmessenden Durchlasssystems für eine Partikelstrahlanlage insbesondere einer Strahlanlage zur Bearbeitung von Oberflächen, dessen Durchsatz an Strahlmittel über eine Zeit und/oder Größen veränderbare Durchlassöffnung vorgegeben wird und mittels eines nachangeordneten Durchsatzsensors als Durchsatzsensorsignal (DS) bestimmt wird, wobei das Durchsatzsensorsignal (DS) zur Regelung einer Stellgröße (SG) für den Einsteligrad der Durchlassöffnung verwendet wird,
**dadurch gekennzeichnet, dass**
zur Justierung des Durchlasssystems für mindestens einen Wert der Stellgröße (SG) der tatsächliche Durchsatz (D) durch die Durchlassöffnung, mittels einer Messung des durchgelassenen Strahlmittelgewichts (M) innerhalb einer definierten Zeitspanne (Dt) bestimmt wird, und die Stellgröße (SG), der tatsächliche Durchsatz (D) und das entsprechende Durchsatzsensorsignat (DS) in einer Zuordnungstabelle abgelegt werden, wobei die Beziehungen zwischen tatsächlichem Durchsatz (D), der Stellgröße (SG) sowie dem Durchsatzsensorsignal (DS) beim darauffolgenden Betrieb verwendet werden.

2. Verfahren nach Anspruch 1, **dadurch gekennzeichnet, dass** zur Justierung des Durchlasssystems aus den gemessenen Werten der Zuordnungstabelle die Stellgröße (SG) als Funktion des tatsächlichen Durchsatzes (D) berechnet wird.

3. Verfahren nach Anspruch 2, **dadurch gekennzeichnet, dass** zur Justierung des Durchlasssystems aus den gemessenen Werten der Zuordnungstabelle der tatsächliche Durchsatz (D) als Funktion des Durchsatzsensorsignals (DS) berechnet wird.

4. Verfahren nach Anspruch 2 oder 3, **dadurch gekennzeichnet, dass** ein funktioneller Zusammenhang zwischen der Stellgröße (SG) und dem tatsächlichen Durchsatz (D) sowie dem tatsächlichen Durchsatz (D) und dem Durchsatzsensorsignal (DS) mittels einer linearen Interpolation zwischen den Werten der Zuordnungstabelle berechnet wird.

5. Verfahren nach Anspruch 2 oder 3, **dadurch gekennzeichnet, dass** ein funktioneller Zusammenhang zwischen der Stellgröße (SG) und dem tatsächlichen Durchsatz (D) sowie dem tatsächlichen Durchsatz (D) und dem Durchsatzsensorsignal (DS) als Polynom mindestens zweiter Ordnung oder als Polynomzug auf Grundlage der Werte aus der Zuordnungstabelle berechnet wird.

6. Verfahren nach einem der vorherigen Ansprüche, **dadurch gekennzeichnet, dass** zur Justierung des Durchlasssystems die Stellgröße (SG) programmgesteuert in diskreten Schritten verstellt wird und der tatsächliche Durchsatz (D), das Durchsatzsensorsignal (DS) sowie die Stellgröße (SG) in der Zuordnungstabelle für jeden Schritt abgelegt werden.

7. Verfahren nach einem der vorherigen Ansprüche, **dadurch gekennzeichnet, dass** zur Überprüfung der Justierung für einen angeforderten Durchsatz aus der Zuordnungstabelle die entsprechende Stellgröße bestimmt und an die Durchlassöffnung angelegt wird und der tatsächlich gemessene Durchsatz mit dem angeforderten Durchsatz verglichen wird.

8. Verfahren nach einem der vorherigen Ansprüche, **dadurch gekennzeichnet, dass** beim Betrieb des Durchlasssystems mit einem angeforderten tatsächlichen Durchsatz (D) die entsprechende Stellgröße (SG) aus der bei der Justierung bestimmten Zuordnungstabelle eingestellt wird.

9. Verfahren nach einem der vorherigen Ansprüche, **dadurch gekennzeichnet, dass** beim Betrieb des Durchlasssystems der tatsächliche Durchsatz (D) auf Grundlage des Durchsatzsensorsignals (DS) aus der Zuordnungstabelle, die bei der Justierung erstellt worden ist, bestimmt wird.

10. Verfahren nach einem der vorherigen Ansprüche, **dadurch gekennzeichnet, dass** beim Betrieb des Durchlasssystems die Umgebungsbedingungen, wie Umgebungstemperatur, Luftdruck und Luftfeuchtigkeit, gemessen werden und die Stellgröße (SG) und/oder das Durchsatzsensorsignal (DS) aus der Zuordnungstabelle mit einer Korrekturfunktion multipliziert wird, die von den Umgebungsbedingungen abhängt.

11. Verfahren nach einem die vorherigen Ansprüche, **dadurch gekennzeichnet, dass** bei einer Strahlanlage automatisch zwischen der Justierung und dem Betrieb geschaltet wird, indem das Strahlmittel entweder auf ein Werkstück oder in einen Sammelbehälter geleitet wird.

12. Verfahren nach einem der vorherigen Ansprüche, **dadurch gekennzeichnet, dass** zur Bestimmung des Strahlmittelgewichts (M) entweder die Gewichtszunahme eines Sammelbehälters, in den das Strahlmittel geführt wird, oder die Gewichtsabnahme eines Vorratsbehälters, aus dem das Strahlmittel zugeführt wird, gemessen wird.

13. Partikelstrahlanlage (1) zur Bearbeitung von Oberflächen unter Verwendung des Verfahrens nach einem der vorgegangenen Ansprüche, wobei die Strahlanlage (1) über einen Vorratsbehälter (3) verfügt, der mit Strahlmittel (2) gefüllt ist und über ein Durchlasssystem (5) mit einer Auslassöffnung (4) verbunden ist, wobei das Durchlasssystem (5) eine Zeit und/oder Größen veränderbare Durchlassöffnung (6) und einen nachgelagerten Durchsatzsensor (7) aufweist, **dadurch gekennzeichnet, dass** die Strahlanlage (1) eine Wägeeinheit (9) aufweist, die das Gewicht des Strahlmittels bestimmt, das durch das Durchlasssystem (5) in einen Sammelbehälter (8) gelangt, wobei das Durchlasssystem (5) mit einem Prozessmodul (11) verbunden ist, welches die einstellbare Durchlassöffnung (6) regelt sowie den Durchsatzsensor (7) ausliest und mit einer Rechnereinheit (10) verbunden ist, die zur Auswertung der Wägeeinheit (9) und zur Steuerung des Prozessmoduls (11) vorgesehen ist.

14. Partikelstrahlanlage (1) nach Anspruch 13, **dadurch gekennzeichnet, dass** die Wägeeinheit (9), die das durch das Durchlasssystem (5) gelangende Strahlmittelgewicht bestimmt, mit dem Sammelbehälter (8) verbunden ist und dessen Gewichtszunahme misst oder dass die Wägeeinheit (9), die das durch das Durchlasssystem (5) gelangende Strahlmittelgewicht bestimmt, mit dem Vorratsbehälter (3) verbunden ist und dessen Gewichtsabnahme misst.

15. Partikelstrahlanlage (1) nach Anspruch 13, **dadurch gekennzeichnet, dass** sich zwischen dem Durchlasssystem (5) und dem Sammelbehälter (8) ein zusätzlicher Abscheider (13) befindet, in dem das Strahlmittel von anderen Prozessstoffen abgeschieden wird, um komplett in den Sammelbehälter (8) zu gelangen.

## Claims

1. Method for adjusting or operating a particle-metering system for a particle blasting installation, in particular a blasting installation for the working of surfaces, the abrasive throughput of which is preset by means of a passing-through opening that can be varied on the basis of time and/or variables and is determined by means of a downstream throughput sensor as a throughput sensor signal (DS), wherein the throughput sensor signal (DS) is used for controlling a manipulated variable (SG) for the degree of setting of the passing-through opening, **characterized in that**
to adjust the metering system for at least one value of the manipulated variable (SG), the actual throughput (D) through the passing-through opening is determined by means of a measurement of the weight of abrasive material (M) allowed through within a defined time period (Dt), and the manipulated variable (SG), the actual throughput (D) and the corresponding throughput sensor signal (DS) are stored in an assignment table, wherein the relations between the actual throughput (D), the manipulated variable (SG) and the throughput sensor signal (DS) are used during subsequent operation.

2. Method according to Claim 1, **characterized in that**, to adjust the metering system, the manipulated variable (SG) is calculated from the measured values of the assignment table as a function of the actual throughput (D).

3. Method according to Claim 2, **characterized in that**, to adjust the metering system, the actual throughput (D) is calculated from the measured values of the assignment table as a function of the throughput sensor signal (DS).

4. Method according to Claim 2 or 3, **characterized in that** a functional relationship between the manipulated variable (SG) and the actual throughput (D) and also the actual throughput (D) and the throughput sensor signal (DS) is calculated by means of a linear interpolation between the values of the assignment table.

5. Method according to Claim 2 or 3, **characterized in that** a functional relationship between the manipulated variable (SG) and the actual throughput (D) and also the actual throughput (D) and the throughput sensor signal (DS) is calculated as a polynomial of at least the second degree or as a polynomial progression on the basis of the values from the assignment table.

6. Method according to one of the preceding claims, **characterized in that**, to adjust the metering system, the manipulated variable (SG) is adjusted in a program-controlled manner in discrete steps and the actual throughput (D), the throughput sensor signal (DS) and also the manipulated variable (SG) are stored in the assignment table for each step.

7. Method according to one of the preceding claims, **characterized in that**, to check the adjustment for a required throughput from the assignment table, the corresponding manipulated variable is determined and applied to the passing-through opening and the actually measured throughput is compared with the required throughput.

8. Method according to one of the preceding claims, **characterized in that**, during the operation of the metering system with a required actual throughput (D), the corresponding manipulated variable (SG) from the assignment table determined during the adjustment is set.

9. Method according to one of the preceding claims, **characterized in that**, during the operation of the metering system, the actual throughput (D) is determined on the basis of the throughput sensor signal (DS) from the assignment table that was created during the adjustment.

10. Method according to one of the preceding claims, **characterized in that**, during the operation of the metering system, the ambient conditions, such as ambient temperature, air pressure and air humidity, are measured and the manipulated variable (SG) and/or the throughput sensor signal (DS) from the assignment table is multiplied by a correction function, which depends on the ambient conditions.

11. Method according to one of the preceding claims, **characterized in that**, in a blasting installation, switching between adjustment and operation automatically takes place by the abrasive material being directed either onto a workpiece or into a collecting container.

12. Method according to one of the preceding claims, **characterized in that**, for determining the weight of abrasive material (M), either the increase in weight of a collecting container into which the abrasive material is sent or the decrease in weight of a storage container from which the abrasive material is fed is measured.

13. Particle blasting installation (1) for working surfaces by using the method according to one of the preceding claims, wherein the blasting installation (1) has a storage container (3), which is filled with abrasive material (2) and is connected by way of a metering system (5) to an outlet opening (4), wherein the metering system (5) has a passing-through opening (6) that can be varied on the basis of time and/or variables and a downstream throughput sensor (7), **characterized in that** the blasting installation (1) has a weighing unit (9), which determines the weight of the abrasive material that passes through the metering system (5) into a collecting container (8), wherein the metering system (5) is connected to a process module (11), which controls the adjustable passing-through opening (6) and also reads the throughput sensor (7) and is connected to a computer unit (10), which is provided for evaluating the weighing unit (9) and for controlling the process module (11).

14. Particle blasting installation (1) according to Claim 13, **characterized in that** the weighing unit (9), which determines the weight of abrasive material passing through the metering system (5), is connected to the collecting container (8) and measures the increase in weight thereof or **in that** the weighing unit (9), which determines the weight of the abrasive material passing through the metering system (5), is connected to the storage container (3) and measures the decrease in weight thereof.

15. Particle blasting installation (1) according to Claim 13, **characterized in that** between the metering system (5) and the collecting container (8) there is an additional separator (13), in which the abrasive material is separated from other process materials in order to pass completely into the collecting container (8).

## Revendications

1. Procédé d'ajustement ou de fonctionnement d'un système de passage pour un équipement de grenaillage de particules, notamment un équipement de grenaillage destiné à usiner des surfaces, dont le débit en agent de grenaillage est prédéfini par le biais d'une ouverture de passage modifiable en temps et/ou en taille et déterminé en tant que signal de capteur de débit (DS) au moyen d'un capteur de débit monté en aval, le signal de capteur de débit (DS) étant utilisé pour la régulation d'une grandeur de commande (SG) pour le degré de réglage de l'ouverture de passage,
**caractérisé en ce que**
en vue d'ajuster le système de passage, le débit effectif (D) à travers l'ouverture de passage est déterminé pour au moins une valeur de la grandeur de commande (SG) au moyen d'une mesure du poids d'agent de grenaillage (M) ayant pu passer à l'intérieur d'un intervalle de temps (Dt) défini, et la grandeur de commande (SG), le débit effectif (D) et le signal de capteur de débit (DS) sont enregistrés dans une table de correspondance, les relations entre le débit effectif (D), la grandeur de commande (SG) ainsi que le signal de capteur de débit (DS) étant utilisées lors du fonctionnement qui suit.

2. Procédé selon la revendication 1, **caractérisé en ce qu'**en vue d'ajuster le système de passage à partir des valeurs mesurées de la table de correspondance, la grandeur de commande (SG) est calculée en fonction du débit effectif (D).

3. Procédé selon la revendication 2, **caractérisé en ce qu'**en vue d'ajuster le système de passage à partir des valeurs mesurées de la table de correspondance, le débit effectif (D) est calculé en fonction du signal de capteur de débit (DS).

4. Procédé selon la revendication 2 ou 3, **caractérisé en ce qu'**une association fonctionnelle entre la grandeur de commande (SG) et le débit effectif (D) ainsi qu'entre le débit effectif (D) et le signal de capteur de débit (DS) est calculée au moyen d'une interpolation linéaire entre les valeurs de la table de correspondance.

5. Procédé selon la revendication 2 ou 3, **caractérisé en ce qu'**une association fonctionnelle entre la grandeur de commande (SG) et le débit effectif (D) ainsi qu'entre le débit effectif (D) et le signal de capteur de débit (DS) est calculée en tant que polynôme d'au moins du deuxième ordre ou en tant que train polynomial sur la base des valeurs issues de la table de correspondance.

6. Procédé selon l'une des revendications précédentes, **caractérisé en ce qu'**en vue d'ajuster le système de passage, la grandeur de commande (SG) est réglée de manière programmée en pas discrets et le débit effectif (D), le signal de capteur de débit (DS) ainsi que la grandeur de commande (SG) sont enregistrés dans le tableau de correspondance pour chaque pas.

7. Procédé selon l'une des revendications précédentes, **caractérisé en ce qu'**en vue de vérifier l'ajustement pour un débit demandé, la grandeur de commande correspondante est déterminée à partir du tableau de correspondance et appliquée à l'ouverture de passage et le débit effectif mesuré est comparé au débit demandé.

8. Procédé selon l'une des revendications précédentes, **caractérisé en ce que** lors du fonctionnement du système de passage avec un débit effectif (D) demandé, la grandeur de commande (SG) correspondante issue du tableau de correspondance déterminé lors de l'ajustement est réglée.

9. Procédé selon l'une des revendications précédentes, **caractérisé en ce que** lors du fonctionnement du système de passage, le débit effectif (D) est déterminé sur la base du signal de capteur de débit (DS) issu du tableau de correspondance qui a été créé lors de l'ajustement.

10. Procédé selon l'une des revendications précédentes, **caractérisé en ce que** lors du fonctionnement du système de passage, les conditions environnantes, telles que la température ambiante, la pression atmosphérique et l'humidité de l'air sont mesurées et la grandeur de commande (SG) et/ou le signal de capteur de débit (DS) issu du tableau de correspondance est multiplié par une fonction de correction qui dépend des conditions environnantes.

11. Procédé selon l'une des revendications précédentes, **caractérisé en ce que** dans le cas d'un équipement de grenaillage, une commutation entre l'ajustement et le fonctionnement est effectuée automatiquement en guidant l'agent de grenaillage soit sur une pièce ouvrée, soit dans un récipient collecteur.

12. Procédé selon l'une des revendications précédentes, **caractérisé en ce que** la détermination du poids d'agent de grenaillage (M) est réalisée en mesurant soit l'augmentation de poids d'un récipient collecteur dans lequel est acheminé l'agent de grenaillage, soit la diminution de poids d'un réservoir depuis lequel est acheminé l'agent de grenaillage.

13. Équipement de grenaillage de particules (1) destiné à l'usinage de surface en utilisant le procédé selon l'une des revendications précédentes, l'équipement de grenaillage (1) disposant d'un réservoir (3) qui est rempli de l'agent de grenaillage (2) et est relié à une ouverture de sortie (4) par le biais d'un système de passage (5), le système de passage (5) possédant une ouverture de passage (6) modifiable en temps et/ou en taille et un capteur de débit (7) monté en aval, **caractérisé en ce que** l'équipement de grenaillage (1) possède une unité de pesage (9) qui détermine le poids de l'agent de grenaillage qui parvient dans un récipient collecteur (8) en passant à travers le système de passage (5), le système de passage (5) étant relié à un module de processus (11), qui régule l'ouverture de passage (6) réglable et lit le capteur de débit (7), et étant relié à une unité de calcul (10) qui est conçue pour interpréter l'unité de pesage (9) et pour commander le module de processus (11).

14. Équipement de grenaillage de particules (1) selon la revendication 13, **caractérisé en ce que** l'unité de pesage (9) qui détermine le poids de l'agent de grenaillage qui passe à travers le système de passage (5) est reliée au récipient collecteur (8) et mesure son augmentation de poids ou **en ce que** l'unité de pesage (9) qui détermine le poids de l'agent de grenaillage qui passe à travers le système de passage (5) est reliée au réservoir (3) et mesure sa diminution de poids.

15. Équipement de grenaillage de particules (1) selon la revendication 13, **caractérisé en ce qu'**un séparateur (13) supplémentaire se trouve entre le système de passage (5) et le récipient collecteur (8), dans lequel l'agent de grenaillage est séparé des autres matières du processus afin de parvenir complètement dans le récipient collecteur (8).
